Europäisches Patentamt

European Patent Office

Office européen des brevets

(11) Veröffentlichungsnummer: **0 236 267**
B1

# EUROPÄISCHE PATENTSCHRIFT

(45) Veröffentlichungstag der Patentschrift:
19.12.90

(51) Int. Cl.⁵: **B64D 45/00**

(21) Anmeldenummer: **87810093.2**

(22) Anmeldetag: **16.02.87**

(54) Verfahren und Vorrichtung zur Verhütung von Vogelschlag.

(30) Priorität: **04.03.86 CH 880/86**

(43) Veröffentlichungstag der Anmeldung:
**09.09.87 Patentblatt 87/37**

(45) Bekanntmachung des Hinweises auf die Patenterteilung:
**19.12.90 Patentblatt 90/51**

(84) Benannte Vertragsstaaten:
**AT BE CH DE ES FR GB GR IT LI NL SE**

(56) Entgegenhaltungen:
**FR-A- 2 227 993**
**US-A- 3 735 115**
**US-A- 3 903 501**
**US-A- 3 925 704**

(73) Patentinhaber: **Steffen, Rüdiger, Haldenstrasse 673,
CH-8425 Oberembrach(CH)**

(72) Erfinder: **Steffen, Rüdiger, Haldenstrasse 673,
CH-8425 Oberembrach(CH)**

(74) Vertreter: **Feldmann, Clarence Paul et al, c/o
Patentanwaltsbüro FELDMANN AG Postfach
Kanalstrasse 17, CH-8152 Glattbrugg(CH)**

**Beschreibung**

Der Vogelsohlag bildet in der Fliegerei ein bedeutendes Sicherheitsrisiko, besonders bei schnelleren Maschinen, deren Annäherungsgeschwindigkeiten es einem Vogel innerhalb der Vorwarnzeit nicht mehr erlauben, den Kollisionsbereich zu verlassen. Aus diesem Grund kommt es immer wieder zu solchen Kollisionen mit Vögeln, welche in Fachkreisen als Vogelschlag bezeichnet werden. Ein blosser Zusammenstoss mit einem kleinen Vogel richtet in der Regel nicht allzu grossen Schaden an, obwohl sich auch in solchen Fällen schon gravierende Vorfälle abgespielt haben. Bei genügend hohen Geschwindigkeiten, insbesondere bei kleineren Jet-Flugzeugen, kann der Aufprall so stark sein, dass der Vogelkörper die Kabinenwand oder die vordere Flügelkante durchschlägt. Es sind Fälle bekannt geworden, bei denen gar Personen durch solche durchgeschlagenen Vogelkörper verletzt wurden. Besonders dramatisch sind Zusammenstösse von Verkehrsmaschinen mit ganzen Vogelschwärmen. Unter Umständen können dabei sogar Triebwerke ausfallen. Jedenfalls werden durch solche Kollisionen besonders die Triebwerke beschädigt. Die grossen Düsentriebwerke von Verkehrsmaschinen erzeugen in ihrem Ansaugbereich einen beachtlichen Unterdruck, welcher zusätzlich begünstigt, dass Vögel aus dem Gefahrenbereich schliesslich in die Triebwerke gelangen. Nun sind die Turbinenschaufeln solcher Triebwerke allerhöchsten thermischen und mechanischen Belastungen ausgesetzt. Ein dort aufschlagender Vogel kann unter Umständen eine hochbelastete Turbinenschaufel abschlagen. Die sofort einsetzende Unwucht erzeugt gefährliche Resonanzschwingungen, so dass der Pilot dazu gezwungen ist, das betroffene Triebwerk unverzüglich stillzulegen. Die abgeschlagene Triebwerkschaufel kann im Triebwerkinnern grossen Schaden anrichten. Wird etwa das Brennstoff-Zufuhrsystem beschädigt, so droht sogar ein Triebwerkbrand. Die direkten materiellen Schäden verursachen ihrerseits enorm kostspielige Reparaturen und entsprechende Standzeiten. Weltweit werden jährlich an die 20'000 Vogelschläge registriert, welche Schäden in Höhe von 3-4 Mia. DM zur Folge haben. Allein schon diese Zahlen beweisen, dass hier Abhilfe dringend gesucht ist.

Man hat bisher zu den verschiedensten Mitteln gegriffen, um die Vögel aus dem Gefahrenbereich zu verbannen. Zu solchen Massnahmen gehören zum Beispiel alle Vorkehrungen, die dazu beitragen, einen Flughafen vogelfeindlich zu gestalten. So hat man vielerorts sämtliche Bäume und Sträucher entfernt, um den Vögeln die Nistmöglichkeiten zu entziehen. Weiter schneidet man das Gras des an die Pisten angrenzenden Wieslandes möglichst fleissig und sehr kurz, um die Insektenpopulationen darin klein zu halten und damit das Nahrungspotential für die Vögel zu reduzieren. Andererseits erlaubt das kurzgeschnittene Gras eher, einen darauf befindlichen Vogelschwarm zu erkennen. Zu diesen natürlichen Massnahmen zählen sogar speziell abgerichtete Raubvögel, die im Flughafengelände angesiedelt werden und ihr Revier von anderen Vögeln freihalten sollen. Es sind auch verschiedene technische Mittel zur Anwendung gekommen, von denen man sioh eine Verscheuchung der Vögel erhofft. Ein solches Mittel ist zum Beispiel eine ortsfeste, akustische Warnvorrichtung, mit der in unregelmässigen Abständen geknallt wird. Auch verschiedene optische Warnsignale in verschiedenen Farben, Intensitäten und Blinkintervallen kommen zur Anwendung. All diese Vorrichtungen haben sich nur partiell als nützlich erwiesen. Doch eine wirklich effiziente Verhinderung von Vogelschlag vermögen sie nicht sicherzustellen. Wohl scheucht ein Knall die Vögel auf, jedoch ist damit in keiner Weise garantiert, dass sich die Vögel aus dem Gefahrenbereich begeben. Unter Umständen fliegen sie direkt in den Kollisionsbereich, den sie ja infolge des für sie unnatürlichen und schnell nähernden Flugzeuges nicht als solchen erkennen. Zudem kommt eine gewisse Angewöhnung, trotzdem die Knalls in unregelmässigen Abständen losgelassen werden, so dass die Wirkung schliesslich in vielen Fällen unbefriedigend ist. Aehnliche Erfahrungen hat man bisher mit optischen Warnvorrichtungen gemacht. Die Vögel haben sich schon bald an alle möglichen Lichtfarben und Blinklichter gewöhnt. Die vorliegende Erfindung stellt sich zur Aufgabe, die genannten Probleme zu lösen und ein Verfahren zu schaffen, welches wirksam den Vogelschlag und all seine negativen Konsequenzen für Fliegerei zu verhindern vermag. Gleichzeitig schafft die Erfindung auch eine Vorrichtung zur Ausübung des Verfahrens. Die Aufgabe wird gelöst durch ein Verfahren zur Verhütung von Vogelschlag an Flugzeugen während der An- und Ausrollphase sowie im Flug, mittels mindestens einer, Lichtblitze erzeugenden Lichtquelle an Flugzeug, dadurch gekennzeichnet, dass die Frequenz der erzeugten Lichtblitze während mindestens einer Zykluszeit durch Steigerung variiert wird.

Der Vorteil dieses Verfahrens ist hauptsächlich darin zu sehen, dass diese Art des Warnens vogelspezifischer ausgelegt ist. Ein Vogel sieht die Welt ganz anders als der Mensch. Seine Sinne sind sehr verschieden von den menschlichen Sinnen ausgelegt. Sein Gehör und sein Auge sprechen auf andere Frequenzbereiche an. Deshalb ist es unumgänglich, ein Verfahren zur Verhinderung von Vogelschlag in enger Zusammenarbeit mit der Verhaltensforschung von Vögeln zu entwickeln. Ergebnisse aus diesem Forschungsgebiet haben gezeigt, dass das Vogelverhalten im wesentlichen visuell bestimmt ist, dass heisst, der Gesichtssinn ist stark dominant und bestimmt hauptsächlich das Verhalten. Gleichzeitig sind Vögel verhältnismässig wenig intelligent und stark vom Instinkt geleitet. Sie verfügen zum Beispiel über einen ausgeprägten und für sie lebenswichtigen Fluchtinstinkt, den es gezielt auszulösen gilt. Will man erreichen, dass ein Vogel in einer bestimmten Richtung oder von einem bestimmten Bereich wegfliegt, so muss ein Fluchtaffekt erzeugt werden, wobei drei Hauptpunkte von grosser Bedeutung sind.

## 1. Aufmerksamkeit:

Diese muss beim Vogel aufs äusserste erregt werden, dann bewirkt sie einen Fluchtaffekt. Hier lehrt die Verhaltensforschung, dass ein Lichtblitz die Aufmerksamkeit der Vögel enorm steigert. Schon ein blinkendes Licht steigert die Aufmerksamkeit im Vergleich zum Ruhezustand um ein Vielfaches. Ein eigentlicher Lichtblitz hingegen vermag eine rund zehnmal stärkere Aufmerksamkeit zu erregen als ein blosses Blinklicht. Diese Tatsache macht sich das erfindungsgemässe Verfahren zu Nutze. Das jeweils kurze Aufblitzen der Lichtquelle ist auch deshalb wichtig, weil es bei Vögeln den sogenannten Sonneneffekt gibt. Dies bedeutet, dass ein fliehender Vogel dazu neigt, in Richtung gegen ein helles Licht hin zu fliegen, sogar wenn es sich dabei um ein blinkendes Licht handelt. Bei einem aufblitzenden Licht hingegen ist dieser Effekt nicht zu beobachten.

## 2. Geschwindigkeit:

Es versteht sich, dass ein Vogel stets desto schneller flieht, umso schneller sich ein potentieller Feind ihm annähert. Deshalb nützt das Verfahren die offensichtliche Tatsache aus, dass ein in steigender Frequenz aufblitzendes "Strobe-Light" einem Vogel den Eindruck eines sich schnell nähernden "Feindes" vermittelt, und er sich fluchtartig von dieser aufblitzenden Lichtquelle entfernt. Bei gleichbleibender Frequenz hingegen zeigen die Vögel eine weniger ausgeprägte Reaktion. Nach ausgedehnten Versuchen erwies sich die Steigerung der Blinkfrequenz in einem Bereich von etwa 0.1 Hz bis hinauf auf etwa 3.0 Hz als am wirksamsten. Auch nach längerer Anwendung wurde bei den Vögeln stets ein starker Fluchtaffekt weg vom aufblitzenden Licht ausgelöst.

## 3. Richtung:

Das Aufscheuchen der Vögel allein verhindert noch nicht mit Sicherheit einen Vogelschlag. Es ist ja notwendig, dass die Vögel einen bestimmten Bereich, nämlich den Kollisionsbereich fluchtartig verlassen und andererseits Vögel, die sich ausserhalb dieses Bereiches aufhalten, durch das Aufscheuchen nicht etwa in diesen Kollisionsbereich hineinfliegen.

Ein weiterer, sehr wichtiger Punkt besteht deshalb darin, dass man das Verfahren mit zwei für den Vogel einsehbaren Lichtquellen ausübt. Dadurch wird dem Vogel erleichtert, die Richtung und die Geschwindigkeit der aufblitzenden Lichter zu bestimmen, so dass er in der richtigen Richtung flieht und nicht etwa vor dem nähernden Flugzeug in derselben Richtung davonfliegt.

Die Lichtquellen zur Ausübung des erfindungsgemässen Verfahrens sind daher so am Flugzeug anzubringen, dass für Vögel im Gefahrenbereich mit Vorteil stets zwei Lichtquellen ersichtlich sind. Der Gefahrenbereich besteht hierbei einerseits aus dem eigentlichen Kollisionsbereich, der durch das Querschnittsprofil des Flugzeuges längs seines Weges gebildet wird. Andererseits gehört zum Gefahrenbereich auch der Raum, aus dem sich ein Vogel innerhalb der Annäherungszeit des Flugzeuges noch in den Kollisionsbereich begeben kann. Dieser Raum wird ungefähr von einem sich von den Flügelenden des Flugzeuges aus nach vorne erweiternden Kegel begrenzt, dessen Oeffnungswinkel umso kleiner wird, je schneller sich das Flugzeug bewegt. Bei einem startenden Verkehrsflugzeug beträgt dieser Oeffnungswinkel bei der Abhebegeschwindigkeit von ca. 80m/s beispielsweise etwa 15°. Rollt das Flugzeug mit der Fluggeschwindigkeit des Vogels, so beträgt er ungefähr 90°. Das Anbringen der Lichtquellen erfolgt deshalb vorteilhaft an den beiden Tragflächen, am besten in Triebwerknähe. Bei Tests wurde gefunden, dass die ideale Zykluszeit etwa der Zeit vom Anrollen bis zum Abheben entspricht, ungefähr 20-30 Sek., und die Frequenz in einem Zyklus von ca. 0.5 Hz auf ca. 2.0 Hz gesteigert wird. Da die ideale Zykluszeit vom Flugzeugtyp abhängig ist, ist vorgesehen, dass die Vorrichtung zur Ausübung des erfindungsgemässen Verfahrens eine beliebige Wahl der Zykluszeit ermöglicht. Der Zyklus kann ein- oder mehrmals aufeinanderfolgend ablaufen, indem die Frequenz immer wieder auf den Anfangswert zurückspringt. Nach Ablauf des oder der Zyklen lässt man die Lichtquelle oder die Lichtquellen mit Vorteil auf der maximalen Endfrequenz weiterblinken, bis man die Vorrichtung wieder abschaltet.

Die Lichtquelle selbst ist vorteilhaft eine Entladungslampe, die am ehesten ein sehr grelles und kurz aufblitzendes Licht erzeugt, das zur Ausübung des Verfahrens besonders geeignet ist. Diese Entladungslampe wird über das Bordnetz mit Strom versorgt und mit einer speziellen Steuereinheit in Form eines Mikroprozessors gesteuert. In dessen Speicher können verschiedene Zyklen und Frequenzen einprogrammierbar sein, welche dann durch eine entsprechende Programmwahl einzeln abrufbar sind. Damit stehen Zyklen und Frequenzen zur Verfügung, welche eigens den zu verscheuchenden Vogelarten und den Geschwindigkeiten des entsprechenden Flugzeugtyps angepasst werden können. Die Aufleuchtzeit ist kurz, um einen möglichst grellen Lichtblitz von hoher Intensität erzeugen zu können. Mit entsprechenden Lampen sind jedoch im Bereich der niedrigen Anfangsfrequenzen auch längere Aufleuchtzeiten denkbar, die gegebenenfalls mit zunehmender Blinkfrequenz kürzer werden.

Nachfolgend wird eine beispielweise Ausführung einer Vorrichtung zur Ausübung des erfindungsgemässen Verfahrens dargestellt.

Es zeigt:

Figur 1 Eine Lichtquelle mit Steuereinheit und Stromversorger,

Figur 2 den vorteilhaften Anbau an einem Flugzeug.

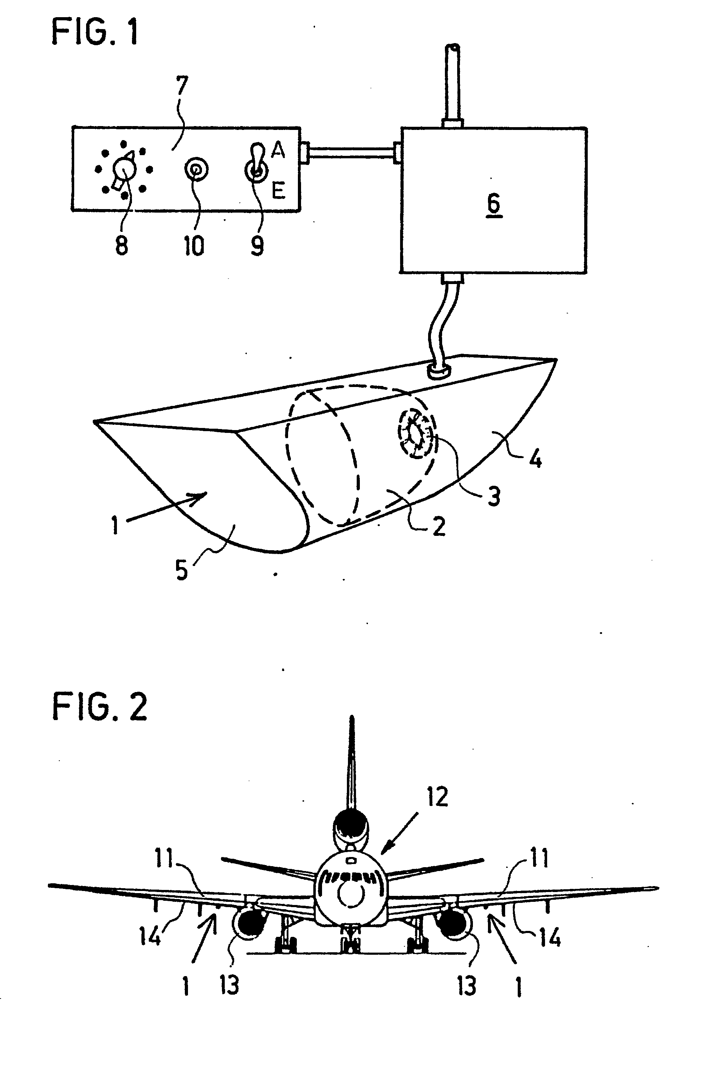

Wie in Figur 1 ersichtlich, besteht die eigentliche Lichtquelle 1 aus einem Reflektor 2 und einer Entladungsröhre 3, die in einem Gehäuse 4 untergebracht sind, das nach aerodynamischen Gesichtspunkten gestaltet ist. Auf der Vorderseite ist das Gehäuse 4 mit einer speziell schräg zur Flugrichtung angeordneten Glasscheibe 5 verschlossen. Diese kann beheizbar sein, um stets den Durchlass der vollen Lichtintensität sicherzustellen. Die eine Seite des Gehäuses 4 ist plan. Dies erlaubt es, die Vorrichtung unten an einer Tragfläche nachträglich anzubauen. Die Entladungsröhre 3 wird vom Stromversorger 6 gespiesen, in dem fortwährend ein Kondensator mit Strom vom Bordnetz aufgeladen wird. Die Entladung wird gesteuert von der Steuereinheit 7, die einen Mikroprozessor umfasst, in dem verschiedene Frequenzen und Zyklen gespeichert sind. Diese zur Verfügung stehenden Programme können mittels einem Programmwahlschalter 8 beliebig einzeln abgerufen werden. Das Verfahren wird hier mit einem einfachen Ein/Aus-Schalter 9 in Betrieb gesetzt, beziehungsweise wieder beendet. Eine Kontrollampe 10 leuchtet auf, wenn die Vorrichtung in Betrieb ist.

In Figur 2 ist der mögliche und vorteilhafte Anbauort von zwei Lichtquellen 1 an den Tragflächen 11 eines Flugzeuges 12 dargestellt. Er befindet sich an der Unterseite 14 der Tragflächen 11, nahe den Triebwerken 13, die ohnehin besonders gefährdet sind. Dort wird das Ueberströmen des Flügelprofils nicht beeinträchtigt und deshalb der Auftrieb nicht oder nur minimal geschmälert.

Das erfindungsgemässe Verfahren kann durch verschiedene Auslöseschaltungen eingeleitet werden. Am einfachsten geschieht dies, indem der Pilot die Steuereinheit 7 mittels einem separaten Schalter 9 engeschaltet. Er wird dies in der Regel unmittelbar vor dem Anrollen tun, bevor er die Gashebel nach vorne schiebt. Sobald er es dann im Steigflug als angemessen erachtet, echaltet er die Vorrichtung wieder aus. Mit dieser Schalteranordung wird dem Piloten ermöglicht, nach eigenem Ermessen in jeder Situation, auch im Flug und insbesondere im Landeanflug die vogelverscheuchenden Lichter, welche als ABC-Lights (Anti-Bird-Collision-Lights) bezeichnet werden können, einzuschalten.

Andere Schaltanordnungen sind speziell für das automatische Ein- und Ausschalten dieser ABC-Lights vorgesehen. Zum Beispiel kann die Steuereinheit von einem Schaltrelais ein- und ausgeschaltet werden, welches seinerseits von einem bordeigenen, beschleunigungsempfindlichen Gerät gesteuert wird. Sobald das Gerät das Ueberschreiten eines gewissen Beschleunigungswertes registriert, steuert es das Relais an, das dann die Steuereinheit einschaltet. Ein Zeitelement sorgt dann dafür, dass das Relais nach einer vorbestimmten Zeit die Steuereinheit wieder ausschaltet. Nach einer anderen Variante ist auch die Steuerung der ABC-Lights mittels einem speziellen Radarsystem denkbar, welches auf Vögel im Gefahrenbereich anspricht und dann wiederum über ein Schaltrelais automatisch die ABC-Lights in Betrieb setzt, sobald es Vögel registriert. Die ABC-Lights bleiben dann solange eingeschaltet, bis das Radar keine Vögel mehr im Gefahrenbereich wahrnimmt.

## Patentansprüche

1. Verfahren zur Verhütung von Vogelschlag an Flugzeugen während der An- und Ausrollphase sowie im Flug, mittels mindestens einer, Lichtblitze erzeugenden Lichtquelle am Flugzeug, dadurch gekennzeichnet, dass die Frequenz der erzeugten Lichtblitze während mindestens einer Zykluszeit durch Steigerung variiert wird.

2. Verfahren nach Anspruch 1, dadurch gekennzeichnet, dass die Frequenz der Lichtblitze während dem Zyklus kontinuierlich in einem Bereich von minimal 0.1 Hz bis maximal 3.0 Hz gesteigert wird und die Zykluszeit zwischen 10 Sek. und 40 Sek. liegt.

3. Verfahren nach Anspruch 1, dadurch gekennzeichnet, dass die Frequenz der Lichtblitze im Anschluss an den letzten Zyklus auf der Maximalfrequenz konstant gehalten wird.

4. Verfahren nach Anspruch 1, dadurch gekennzeichnet, dass nur ein Zyklus durchlaufen wird.

5. Verfahren nach Anspruch 1, dadurch gekennzeichnet, dass mehrere Zyklen durchlaufen werden.

6. Vorrichtung zur Ausübung des Verfahrens nach Anspruch 1, dadurch gekennzeichnet, dass die Lichtquelle (1) eine Entladungslampe ist, die von einem als Steuereinheit (7) wirkenden Mikroprozessor gesteuert wird, in dessen Speicher verschiedene Zyklen und Frequenzen einprogrammierbar sind, welche durch eine Programmwahl einzeln abrufbar sind.

7. Vorrichtung zur Ausübung des Verfahrens nach Anspruch 6, dadurch gekennzeichnet, dass die Lichtquelle (1) in einem aerodynamisch gestalteten Gehäuse (4) untergebracht ist, das nachträglich an das Flugzeug anbaubar ist.

8. Vorrichtung zur Ausübung des Verfahrens nach Anspruch 6, dadurch gekennzeichnet, dass die Steuereinheit (7) durch einen separaten Schalter (9) am Cockpit ein- und ausschaltbar ist.

9. Vorrichtung zur Ausübung des Verfahrens nach Anspruch 6, dadurch gekennzeichnet, dass die Steuereinheit (7) von einem Schaltrelais eingeschaltet wird, das von einem beschleunigungsempfindlichen, bordeigenen Gerät in Betrieb gesetzt wird, welches bei Ueberschreiten eines bestimmten Beschleunigungswertes anspricht, und dass die Steuereinheit (7) nach einer vorbestimmten Zeit mittels eines Zeitelementes wieder abgeschaltet wird.

10. Vorrichtung zur Ausübung des Verferens nach Anspruch 6, dadurch gekennzeichnet, dass die Steuereinheit (7) von einem bordeigenen Radarsystem, welches auf Vögel im Gefahrenbereich anspricht, automatisch in Betrieb gesetzt wird und eingeschaltet bleibt, solange das Radarsystem Vögel im besagten Bereich registriert.

## Claims

1. Method for preventing the impact of birds on aircraft during the taxi-ing phase and the landing-run phase and also during flight, by means of at least one light source which is on the aircraft and which produces light flashes, characterised in that the frequency of the light flashes produced is varied by means of intensification during at least one cycle time.

2. Method according to claim 1, characterised in that the frequency of the light flashes is intensified continuously, during the cycle, within a range of a minimum of 0.1 Hz to a maximum of 3.0 Hz, and the cycle time lies between 10 sec. and 40 sec.

3. Method according to claim 1, characterised in that the frequency of the light flashes, in connection with the last cycle, is maintained constant at the maximum frequency.

4. Method according to claim 1, characterised in that only one cycle is performed.

5. Method according to claim 1, characterised in that several cycles are performed.

6. Device for operating the method according to claim 1, characterised in that the light source (1) is a discharge lamp which is controlled by a microprocessor which acts as a control unit (7), into whose memory it is possible to programme different cycles and frequencies which can be individually recalled by means of a programme selection.

7. Device for operating the method according to claim 6, characterised in that the light source (1) is accommodated in a housing (4) of streamlined shape, which can be built onto the aircraft subsequently.

8. Device for operating the method according to claim 6, characterised in that the control unit (7) can be switched on and off by means of a separate switch (9) in the cockpit.

9. Device for operating the method according to claim 6, characterised in that the control unit (7) is switched on by a switching relay which is set into operation by an on-board acceleration-sensitive apparatus which responds when a particular acceleration value is exceeded, and in that the control unit (7) is switched off again after a predetermined time, by means of a timing element.

10. Device for operating the method according to claim 6, characterised in that the control unit (7) is automatically set into operation by an on-board radar system which responds to birds within the danger area and which remains switched on as long as the radar system registers birds within the aforesaid area.

## Revendications

1. Procédé pour empêcher les impacts d'oiseaux sur des avions pendant la phase de roulement sur la piste pour le départ et à l'atterrissage, ainsi que pendant le vol, au moyen d'au moins une source de lumière prévue sur l'avion et générant des éclairs, caractérisé en ce que l'on varie la fréquence des éclairs générés, par augmentation de la fréquence, pendant au moins un temps de cycle.

2. Procédé selon la revendication 1, caractérisé en que l'on augmente la fréquence des éclairs de façon continue, pendant le cycle, dans une plage allant d'une valeur minimale de 0,1 Hz à une valeur maximale de 3,0 Hz, le temps de cycle étant compris entre 10 secondes et 40 secondes.

3. Procédé selon la revendication 1, caractérisé en ce que, à la suite du dernier cycle, on maintient la fréquence des éclairs constante à la fréquence maximale.

4. Procédé selon la revendication 1, caractérisé par l'exécution d'un seul cycle.

5. Procédé selon la revendication 1, caractérisé par l'exécution de plusieurs cycles.

6. Dispositif pour la mise en oeuvre du procédé selon la revendication 1, caractérisé en ce que la source de lumière (1) est une lampe à décharge commandée par un microprocesseur agissant en tant qu'unité de commande (7) et dans la mémoire duquel peuvent être programmés différents cycles et fréquences susceptibles d'être appelés individuellement par la sélection d'un programme.

7. Dispositif pour la mise en oeuvre du procédé selon la revendication 6, caractérisé en ce que la source de lumière (1) est logée dans un boîtier (4) de conformation aérodynamique et que l'on peut monter après coup sur l'avion.

8. Dispositif pour la mise en oeuvre du procédé selon la revendication 6, caractérisé en ce que l'unité de commande (7) peut être enclenchée et coupée au moyen d'un interrupteur (9) particulier dans le cockpit.

9. Dispositif pour la mise en oeuvre du procédé selon la revendication 6, caractérisé en ce que l'unité de commande (7) est enclenchée par un relais excité par un appareil installé à bord et sensible à d'accélération, qui réagit au dépassement d'une valeur d'accélération déterminée, et que l'unité de commande (7) est arrêtée après un temps préfixé au moyen d'un élément temporisateur.

10. Dispositif pour la mise en oeuvre du procédé selon la revendication 6, caractérisé en ce que l'unité de commande (7) est mise en service automatiquement par un système radar installé à bord et réagissant à la présence d'oiseaux dans la zone de danger, l'unité de commande restant enclenchée tant que le système radar détecte des oiseaux dans ladite zone.

# FIG. 1

# FIG. 2